# FASCICULE DE BREVET EUROPEEN

(11) **EP 3 561 402 B1**
(45) Date de publication et mention de la délivrance du brevet: **06.09.2023**
(21) Numéro de dépôt: 19169074.2
(22) Date de dépôt: 12.04.2019
(51) Int. Cl.: F24F 5/00, E04H 1/02

(54) **PROCÉDÉ ET DISPOSITIF DE CONTRÔLE THERMIQUE D'UN BÂTIMENT**
VERFAHREN UND VORRICHTUNG ZUR WÄRMEKONTROLLE EINES GEBÄUDES
METHOD AND DEVICE FOR THERMAL CONTROL OF A BUILDING

(30) Priorité: 24.04.2018 FR 1853580
(43) Date de publication de la demande: 30.10.2019
(73) Titulaire: Raymond, Jean, 31770 Colomiers (FR)
(72) Inventeur: Raymond, Jean, 31770 Colomiers (FR)
(74) Mandataire: BARRE LAFORGUE

(56) Documents cités:
- EP-A1- 2 711 644
- WO-A1-2015/107410
- DE-A1- 19 536 335
- DE-A1-102006 003 361
- FR-A1- 2 985 806
- US-A- 2 604 268

## Description

L'invention concerne un procédé de contrôle thermique d'un bâtiment, un bâtiment thermiquement contrôlé dans lequel est mis en oeuvre un tel procédé et un procédé de construction d'un tel bâtiment.

FR 2 985 806 décrit un système de refroidissement passif d'un bâtiment DE19536335 décrit un système de climatisation.

On connaît déjà de WO2017/063551 un bâtiment d'habitation comprenant un système de contrôle géothermique comprenant un échangeur de chaleur communiquant avec un réservoir d'eau enfoui en profondeur sous le bâtiment d'habitation. Un tel système de contrôle géothermique pose problème. Il nécessite l'installation d'un réservoir à une grande profondeur sous le bâtiment d'habitation et le creusement d'une cavité souterraine de réception et d'installation de ce réservoir. Il est donc complexe dans son installation en cela qu'il nécessite la mise en oeuvre de moyens spécifiques de sécurisation de la cavité creusée pour permettre cette installation sécurisée dans la cavité et le raccordement de ce réservoir à l'échangeur de chaleur. La mise en place de ce réservoir souterrain augmente, du fait de ce creusement, le coût de construction du bâtiment. En outre, le réservoir et les canalisations de raccordement à l'échangeur de chaleur sont soumis après leur installation à des contraintes mécaniques qui peuvent être dues notamment au tassement de matériaux dans le sol et/ou à des mouvements affectant le sol et/ou des glissements de terrain, pouvant entraîner la détérioration du réservoir et/ou des canalisations, une perte d'étanchéité, et une perte totale d'efficacité du système de contrôle géothermique. La réparation d'un tel système de contrôle géothermique est complexe et probablement impossible. En tout état de cause, elle pose également problème dès lors qu'elle nécessite un creusement du sol sous le bâtiment pour accéder au réservoir à réparer.

L'invention vise en particulier à pallier ces inconvénients.

L'invention vise donc à proposer un procédé de contrôle thermique d'un bâtiment, un bâtiment thermiquement contrôlé dans lequel est mis en oeuvre un tel procédé et un procédé de construction d'un tel bâtiment qui ne nécessite pas un creusement spécifique à grande profondeur d'une cavité souterraine de réception d'un réservoir.

L'invention vise également à proposer un tel procédé de contrôle thermique, un tel bâtiment thermiquement contrôlé et un tel procédé de construction pouvant être mis en oeuvre dans un bâtiment en construction ou dans un bâtiment en rénovation.

L'invention vise également à proposer un tel procédé de contrôle thermique, un tel bâtiment thermiquement contrôlé et un tel procédé de construction permettant de minimiser les coûts d'installation.

L'invention vise également à proposer un tel procédé de contrôle thermique, un tel bâtiment thermiquement contrôlé et un tel procédé de construction qui soient simples dans leur mise en oeuvre.

L'invention vise également à proposer un tel procédé de contrôle thermique, un tel bâtiment thermiquement contrôlé et un tel procédé de construction permettant d'assurer efficacement le contrôle thermique d'un bâtiment.

L'invention concerne donc un procédé selon la revendication 1.

Dans tout le texte :
- le terme « bâtiment » désigne tout édifice comprenant une pluralité de parois ou de murs -y compris des fondations et murs de soubassement- périphériques délimitant latéralement un espace intérieur du bâtiment et un toit protecteur couvrant au moins une partie -notamment la totalité- de cet espace intérieur délimité latéralement par les murs périphériques. Il peut s'agir d'un édifice sensiblement clos latéralement et couvert délimitant un espace de vie -cloisonné ou non- habitable et procurant protection et/ou sécurité et/ou confort à tout être vivant -humain ou animal- séjournant dans cet espace de vie. Le terme « bâtiment » peut également désigner tout édifice comprenant des parois périphériques légères formées de châssis et une couverture également formée de châssis. Il peut s'agir, par exemple, d'une serre destinée à recevoir et abriter une culture agricole ou horticole et à assurer à cette culture des conditions optimales de développement. Un bâtiment, dit bâtiment protecteur, doté de fondations selon l'invention comprend une pluralité de murs périphériques prenant appui sur des fondations, le cas échéant par l'intermédiaire de murs de soubassement interposés entre la base des murs périphériques et les fondations ;
- le terme « plancher » désigne de façon usuelle toute plate forme horizontale d'un bâtiment, construite au-dessus des fondations lors de la construction de ce bâtiment. L'expression « plancher de plus bas niveau » ou « plancher construit de plus bas niveau » désigne le plancher -ou premier plancher- de plus grande profondeur d'un tel bâtiment ;
- l'expression « espace habitable » d'un tel bâtiment désigne de façon usuelle la partie de l'espace intérieur d'un bâtiment qui est limitée vers le bas par le plancher construit de plus bas niveau d'un tel bâtiment.

Dans un procédé selon l'invention, ledit espace souterrain dudit bâtiment protecteur est limité latéralement par les fondations et, le cas échéant, par des murs de soubassement, dudit bâtiment protecteur. Il est limité en profondeur (vers le bas) à la profondeur des fondations, en particulier à la profondeur de la base des fondations. Il peut être limité en profondeur à la profondeur de la plus profonde des fondations ou à la moins profonde des fondations, ledit espace souterrain ne s'étendant pas en profondeur au-delà de la plus profonde des fondations. Il est limité en hauteur (vers le haut) par le plancher de plus bas niveau au-dessus des fondations dudit bâtiment protecteur. Ledit espace souterrain s'étend donc vers le bas jusqu'au fond de l'excavation et vers le haut jusqu'au plancher de l'espace habitable. Ledit espace souterrain dudit bâtiment protecteur s'étend latéralement entièrement à l'aplomb dudit bâtiment protecteur.

Ledit réservoir tampon est logé entièrement dans ledit espace souterrain. Ledit réservoir tampon peut être lui-même entièrement souterrain, c'est à dire s'étendre en totalité en dessous du niveau du sol. Rien n'empêche cependant qu'une partie -notamment une partie minoritaire- dudit réservoir tampon s'étende au-dessus du niveau du sol (mais dans ledit espace souterrain), la majeure partie dudit réservoir tampon s'étendant en dessous du niveau du sol. Ainsi, une partie minoritaire dudit réservoir tampon peut être logée dans une partie, dite « vide sanitaire », dudit espace souterrain.

Dans certains modes de réalisation, un procédé selon l'invention permet un contrôle thermique d'un bâtiment unique. Un tel bâtiment thermiquement contrôlé peut être un bâtiment ou groupe de bâtiments d'habitation, par exemple un pavillon individuel isolé ou un groupe de pavillons isolés -par exemple un groupe de pavillons d'une communauté de pavillons formant un habitat intermédiaire-, un immeuble collectif ou un groupe d'immeubles collectifs. Il peut également s'agir d'un bâtiment d'enseignement (d'une école, d'un lycée ,d'un collège), d'un bâtiment destiné à la garderie d'enfants, d'une crèche, d'un bâtiment d'accueil d'une activité tertiaire (par exemple d'un bâtiment abritant des bureaux), d'un bâtiment destiné à accueillir des personnes âgées (dépendantes ou non), d'un bâtiment destiné à abriter un établissement de soins (hôpital, clinique), d'un bâtiment choisi dans le groupe formé des cafés, hôtels, restaurants (« *CaHoRes* »), d'un bâtiment de spectacle, d'un bâtiment d'exposition. Il peut également s'agir d'un bâtiment abritant un commerce ou un centre commercial.

Dans d'autres modes de réalisation, un procédé selon l'invention permet également un contrôle thermique d'un ensemble de bâtiments thermiquement contrôlés.

Les inventeurs ont observé que, contre toute attente, il est possible de contrôler thermiquement un tel bâtiment, dit bâtiment thermiquement contrôlé, comprenant ou non des fondations en plaçant au moins un réservoir tampon dans ledit espace souterrain dudit bâtiment protecteur, et donc sans nécessiter une excavation spécifique lors de la construction dudit bâtiment protecteur et dudit bâtiment thermiquement contrôlé, et en utilisant chaque réservoir tampon à titre de capacité thermique, c'est-à-dire de source thermique de capacité thermique importante -notamment suffisamment importante pour que la température du liquide dans le réservoir tampon présente de faibles variations, et en particulier reste sensiblement constante, au cours de la mise en oeuvre du procédé de contrôle thermique du bâtiment thermiquement contrôlé -.

Avantageusement, le liquide contenu dans le réservoir tampon tient lieu de source chaude en saison froide dès lors qu'il s'agit de contribuer au réchauffement du bâtiment. Avantageusement, le liquide contenu dans le réservoir tampon tient lieu de source froide en saison chaude dès lors qu'il s'agit de contribuer au rafraîchissement et à la climatisation du bâtiment. Rien n'empêche également de prévoir d'utiliser ledit réservoir tampon à titre de capacité thermique pour contribuer au réchauffement d'au moins un premier bâtiment thermiquement contrôlé et pour contribuer au rafraîchissement d'au moins un deuxième bâtiment thermiquement contrôlé. Rien n'empêche également de prévoir d'utiliser le réservoir tampon à titre de capacité thermique pour contribuer au réchauffement d'au moins une première partie d'un bâtiment thermiquement contrôlé et pour contribuer au rafraîchissement d'au moins une deuxième partie, distincte de ladite première partie dudit bâtiment thermiquement contrôlé. Par exemple, on peut utiliser en saison froide le réservoir tampon pour chauffer les locaux d'un centre commercial dédiés à la réception de la clientèle et pour rafraîchir les locaux de ce même centre commercial dédiés au stockage au froid de denrées périssables.

Dans certains modes de réalisation avantageux selon l'invention, le liquide contenu dans le réservoir tampon est utilisé à titre de capacité thermique pour contrôler directement la température d'air d'au moins un espace habitable dudit bâtiment thermiquement contrôlé. Rien n'empêche cependant de prévoir d'utiliser le liquide contenu dans le réservoir tampon à titre de capacité thermique pour contrôler la température d'un liquide, par exemple d'eau sanitaire, ou d'un fluide -notamment d'un liquide- d'un circuit secondaire d'échange thermique avec de l'air d'au moins un espace habitable dudit bâtiment thermiquement contrôlé. Le circuit secondaire d'échange thermique peut comprendre une tubulure plongeant dans le réservoir tampon et dans laquelle circule le fluide -notamment le liquide-.

Dans certains modes de réalisation avantageux selon l'invention, ledit liquide utilisé à titre de capacité thermique est un liquide caloporteur, c'est-à-dire un liquide susceptible de transporter de l'énergie thermique (calories ou frigories) et d'échanger de l'énergie thermique (calories ou frigories) avec un milieu distinct du liquide caloporteur. Selon certains modes de réalisation simples et avantageux, le liquide caloporteur peut être de l'eau. Il peut s'agir d'eau provenant d'un réseau de distribution d'eau. Il peut également s'agir d'eau de récupération, en particulier d'eau de pluie. Cependant, tout autre type de liquide caloporteur peut être utilisé. Il peut s'agir d'un liquide caloporteur dont l'état physique ne change pas lors de son utilisation dans un procédé selon l'invention. Ce liquide caloporteur est un liquide caloporteur monophasique. Il peut s'agir d'une solution aqueuse d'éthylène glycol, d'une solution aqueuse de propylène glycol ou de tout autre liquide caloporteur monophasique. Rien n'empêche cependant d'utiliser un liquide caloporteur susceptible de se présenter au moins partiellement à l'état liquide et au moins partiellement à l'état vapeur et dont l'état physique est susceptible de changer ou non lors de son utilisation dans un procédé selon l'invention. Ce liquide caloporteur est alors un liquide caloporteur, dit liquide caloporteur diphasique.

Dans certains modes de réalisation avantageux selon l'invention, ledit liquide utilisé à titre de capacité thermique est une solution aqueuse d'au moins un agent désinfectant. En particulier, ledit liquide peut être une solution aqueuse de permanganate de potassium. Selon ces modes de réalisation, on utilise le permanganate de potassium à titre d'agent désinfectant et d'agent dépolluant du liquide. Tout autre agent désinfectant et/ou dépolluant du liquide peut être utilisé dès lors qu'il est compatible avec une utilisation du liquide à titre de capacité thermique. Dans certains modes de réalisation avantageux selon l'invention, ledit liquide utilisé à titre de capacité thermique est une solution aqueuse d'au moins un agent antigel -par exemple d'éthylène glycol- apte à abaisser le point de fusion de la solution aqueuse.

Dans certains modes de réalisation avantageux selon l'invention, au moins une portion d'enveloppe, dite portion d'échange, d'au moins un réservoir tampon est placée en contact avec au moins une partie de surface de sol délimitant en profondeur (vers le bas) ledit espace souterrain (c'est-à-dire avec au moins une partie de fond dudit espace souterrain), de façon à permettre un échange thermique par conduction entre au moins une partie de ladite partie de surface et ledit liquide contenu dans au moins un réservoir tampon. Ainsi, le fond dudit espace souterrain est dépourvu de plancher continu. Ledit espace souterrain n'est pas limité en profondeur (vers le bas) par un tel plancher de sorte qu'au moins une partie de réservoir tampon s'étend directement au contact de la surface du sol dans ledit espace souterrain. Ledit réservoir tampon repose directement sur le fond dudit espace souterrain.

Avantageusement, ladite portion d'échange est formée en un matériau thermiquement conducteur. Avantageusement, ladite portion d'échange est formée en un matériau présentant une conductivité thermique supérieure à la conductivité thermique du reste de l'enveloppe du réservoir tampon.

Dans certains modes de réalisation selon l'invention, ladite partie de surface de sol (partie de fond dudit espace souterrain délimitant en profondeur l'excavation et ledit espace souterrain) dudit espace souterrain est sensiblement plane. Dans ces modes de réalisation, le fond dudit espace souterrain peut être lui-même plan. Rien n'empêche cependant que le fond dudit espace souterrain s'étende sur une pluralité de niveaux, chaque niveau étant lui-même plan et apte à coopérer avec au moins une portion d'échange d'un réservoir tampon. Dans ce mode de réalisation, ladite partie de fond dudit espace souterrain est sensiblement horizontale. Rien n'empêche cependant que ladite partie de fond dudit espace souterrain soit modérément inclinée. Dans un procédé selon l'invention, l'aire de ladite partie de surface de sol dudit espace souterrain s'étendant en contact avec ladite portion d'échange du(des) réservoir(s) tampon est choisie de façon que l'échange thermique par conduction entre ladite partie de surface de sol dudit espace souterrain et ledit liquide du réservoir tampon soit quantitativement optimisé. L'aire de ladite partie de surface de sol dudit espace souterrain peut être comprise entre 10 m² et 1000 m², notamment entre 20 m² et 500 m², en particulier comprise entre 50 m² et 250 m² selon les dimensions dudit bâtiment thermiquement contrôlé et dudit bâtiment protecteur et la profondeur dudit espace souterrain dudit bâtiment protecteur.

Dans certains modes de réalisation avantageux selon l'invention, ledit espace souterrain présente une profondeur moyenne supérieure à 0,5 mètres, notamment comprise entre 0,5 mètre et 15 mètres (selon la profondeur des fondations et dudit espace souterrain et selon la rigueur du climat), en particulier entre 1 mètre et 10 mètres, de préférence entre 2 mètres et 5 mètres. Selon un mode de réalisation particulier d'un procédé selon l'invention, ledit bâtiment protecteur étant une habitation individuelle d'une région tempérée, ledit espace souterrain présente une profondeur moyenne comprise entre 2 mètres et 4 mètres, notamment de l'ordre de 3 mètres. On adapte la profondeur dudit espace souterrain selon la rigueur du climat (et donc de la localisation géographique dudit bâtiment protecteur) de façon que la température du fond dudit espace souterrain soit sensiblement constante au cours de l'année, et pas ou peu dépendante des conditions climatiques, notamment de la température à l'extérieur dudit bâtiment protecteur. À titre d'exemple, la profondeur dudit espace souterrain est adaptée pour que la température du fond dudit espace souterrain soit sensiblement comprise entre 5°C et 15°C au cours de l'année. On augmente la profondeur dudit espace souterrain lorsque les conditions climatiques sont extrêmes (températures et durée de persistance de ces températures extrêmes). On réduit la profondeur dudit espace souterrain lorsque les conditions climatiques sont tempérées.

Dans certains modes de réalisation préférentiels selon l'invention, on forme un flux dudit liquide entre au moins un -notamment chaque-réservoir tampon et au moins un dispositif d'échange thermique adapté pour permettre un échange thermique entre ledit liquide et de l'air -notamment d'un espace habitable s'étendant à l'intérieur- dudit bâtiment thermiquement contrôlé. On forme un tel flux dudit liquide par tout moyen approprié permettant d'établir une circulation dudit liquide entre au moins un -notamment chaque- réservoir tampon et au moins un dispositif d'échange thermique. On peut former un tel flux au moyen d'un dispositif de pompage de liquide permettant de contrôler ledit flux. On forme un tel flux dudit liquide dans un circuit comprenant au moins un réservoir tampon et au moins dispositif d'échange thermique, chaque réservoir tampon présentant une sortie de liquide par laquelle du liquide du réservoir tampon s'écoule dans le circuit en direction et dans au moins un dispositif d'échange thermique et une entrée de liquide par laquelle du liquide du circuit s'écoule dans le réservoir tampon en provenance d'au moins un dispositif d'échange thermique.

Un tel dispositif d'échange thermique est donc adapté pour permettre un transfert d'énergie thermique (calories ou frigories) entre le liquide -notamment le liquide caloporteur- et un autre composant (air, liquide, autre) par conduction et/ou convection et/ou rayonnement par contact du dispositif d'échange thermique avec le liquide -notamment le liquide caloporteur- et avec ledit autre composant. Dans certains modes de réalisation avantageux selon l'invention, au moins un dispositif d'échange thermique est un échangeur thermique d'une machine thermodynamique telle que par exemple une pompe à chaleur ou un dispositif réfrigérant.

Rien n'empêche cependant qu'au moins un dispositif d'échange thermique soit un dispositif d'échange thermique entre ledit liquide et un fluide, dit fluide secondaire, d'un circuit dudit fluide secondaire d'échange thermique entre ledit fluide secondaire et de l'air régnant dans au moins un espace habitable dudit bâtiment thermiquement contrôlé. Ainsi, dans certains modes de réalisation avantageux selon l'invention, on forme un flux dudit liquide entre au moins un réservoir tampon et au moins un dispositif d'échange thermique entre ledit liquide et un fluide secondaire de contrôle de la température de l'air dudit bâtiment contrôlé.

Dans certains modes de réalisation préférentiels selon l'invention, on réalise une isolation thermique d'au moins une partie -notamment de la totalité- d'au moins une paroi délimitant ledit espace souterrain. Dans certains modes de réalisation préférentiels selon l'invention, on réalise une isolation thermique d'au moins une partie -notamment de la totalité- d'au moins une paroi formant plafond ou voute dudit espace souterrain s'étendant vers le haut dudit espace souterrain. Dans certains modes de réalisation préférentiels selon l'invention, avantageusement et en combinaison, on réalise une isolation thermique d'au moins une partie -notamment une partie supérieure- de chaque paroi latérale de l'espace souterrain et d'au moins une partie de paroi formant plafond ou voute s'étendant vers le haut dudit espace souterrain. On isole l'espace souterrain thermiquement latéralement par apposition sur les murs de soubassement (sur la face interne ou préférentiellement sur la face externe) d'un matériau isolant thermique. Également, il est possible d'apposer un tel matériau isolant sur toute la surface (extérieure ou intérieure) des murs (comprenant les murs de soubassement) dudit bâtiment protecteur. Dans ces modes de réalisation préférentiels selon l'invention, l'espace souterrain est isolé thermiquement vers le haut. Une telle isolation thermique permet d'isoler thermiquement l'espace souterrain et le(s) réservoir(s) tampon et de protéger le(s) réservoir(s) tampon vis-à-vis des variations de température extérieure. Rien n'empêche également de réaliser une isolation thermique des parois latérales dudit espace souterrain uniquement sur une partie supérieure (extérieure ou intérieure) desdites parois latérales, la partie inférieure non isolée des parois latérales dudit espace souterrain permettant des échanges thermiques par conduction et/ou par convection et/ou par rayonnement entre ladite partie inférieure non isolée et ledit liquide du réservoir tampon.

Les dimensions de chaque réservoir tampon sont choisies pour permettre le contrôle thermique dudit bâtiment thermiquement contrôlé. En particulier, on dimensionne chaque réservoir tampon de façon que le volume de liquide contenu dans les réservoirs tampon utilisé à titre de capacité thermique soit suffisant pour satisfaire la demande en énergie thermique nécessaire à ce contrôle thermique. En outre, on dimensionne chaque réservoir tampon de façon que ladite portion d'échange de chaque réservoir tampon en contact avec une partie de fond dudit espace souterrain présente une aire suffisante pour maximiser les échanges thermiques entre ladite portion d'échange et le fond dudit espace souterrain et compenser l'énergie dissipée par les dispositifs de chauffage et/ou de refroidissement. Aussi, dans différents modes de réalisation selon l'invention, au moins un réservoir tampon présente un volume interne compris entre 10 m³ et 1000 m³. En particulier, lorsque ledit bâtiment thermiquement contrôlé est un bâtiment d'activité tertiaire (bureaux) ou un bâtiment abritant une activité de débit de boisson et/ou d'hôtellerie et/ou de restauration (« *CaHoRes* »), on choisit de façon commune un réservoir tampon présentant un volume interne compris entre 30 m³ et 300 m³. Rien n'empêche cependant de prévoir un réservoir tampon de volume interne supérieur à 1000 m³ adapté à la conception particulière dudit bâtiment thermiquement contrôlé.

Dans certains modes de réalisation avantageux selon l'invention, au moins une portion d'enveloppe, dite portion d'échange, d'au moins un réservoir tampon est en un matériau thermiquement conducteur et placée en contact avec au moins une partie de fond (délimitant en profondeur ledit espace souterrain) dudit espace souterrain, de façon à permettre un échange thermique par conduction entre au moins une partie de ladite partie de fond et ledit liquide du réservoir tampon.

Dans certains modes de réalisation, avantageusement selon l'invention, on loge dans ledit espace souterrain au moins un -notamment chaque-réservoir tampon présentant au moins une dimension horizontale hors-tout supérieure à sa hauteur hors-tout. Il est également possible que dans ces modes de réalisation selon l'invention, au moins un -notamment chaque- réservoir tampon présente deux dimensions horizontales orthogonales hors-tout supérieures à sa hauteur hors-tout.

Cependant, rien n'empêche que dans certains autres modes de réalisation selon l'invention, au moins un -notamment chaque- réservoir tampon présente une hauteur hors-tout supérieure à au moins une -notamment à chaque- dimension horizontale hors-tout. Dans ce mode de réalisation, au moins un réservoir tampon s'étend verticalement dans ledit espace souterrain. Dans ce mode de réalisation dans lequel le fond de l'espace souterrain s'étend à une grande profondeur entre les fondations du bâtiment, il est possible de ne pas réaliser une isolation thermique des fondations et d'une partie basse des murs de soubassement de façon à permettre un échange thermique entre la partie basse du réservoir tampon vertical et les fondations et la partie basse des murs de soubassement non isolés thermiquement. En tout état de cause, le réservoir tampon s'étendant selon une direction sensiblement verticale est logé entièrement dans l'espace souterrain dudit bâtiment protecteur.

Selon certains modes de réalisation avantageux d'un procédé selon l'invention, on loge dans ledit espace souterrain un réservoir tampon unique occupant la majeure partie dudit espace souterrain. Rien n'empêche que dans ces modes de réalisation d'un procédé selon l'invention, on loge dans ledit espace souterrain d'un réservoir tampon unique occupant la (quasi-) totalité dudit espace souterrain.

Selon certains modes de réalisation avantageux d'un procédé selon l'invention on loge une pluralité de réservoir tampon dans ledit espace souterrain dudit bâtiment protecteur. Selon ces modes de réalisation avantageux, les réservoirs tampon de la pluralité de réservoirs tampon sont reliés les uns aux autres en série et en communication de liquide de façon que le liquide utilisé à titre de capacité thermique circule successivement dans chaque réservoir tampon.

Dans un procédé selon l'invention, on choisit au moins un -notamment chaque- réservoir tampon dont ladite portion d'échange est formée d'un matériau thermiquement conducteur. Dans certains modes de réalisation selon l'invention, tout ou partie d'un réservoir tampon est en un matériau choisi dans le groupe formé des matériaux métalliques, notamment en acier, en acier inoxydable, en alliage d'aluminium, des polymères thermoplastiques et des polymères thermodurcissables, des matériaux composites à matrice organique ou minérale et charge organique, métallique ou minérale, des matériaux formés à partir d'au moins un liant hydraulique, des céramiques, du verre, des textiles. Rien n'empêche de prévoir de réaliser tout ou partie d'un réservoir tampon en pierre de taille, par exemple de réaliser un réservoir tampon taillé dans la roche.

Dans certains modes de réalisation, avantageusement selon l'invention, au moins un -notamment chaque- réservoir tampon est un réservoir ouvert présentant une face supérieure débouchant dans l'espace souterrain. Cependant, dans d'autres modes de réalisation selon l'invention, au moins un -notamment chaque-réservoir tampon peut être un réservoir clos présentant une entrée de liquide et une sortie de liquide. Dans certains modes de réalisation, avantageusement selon l'invention, chaque réservoir tampon peut être formé d'un matériau rigide en flexion et rigide en traction.

Dans certains modes de réalisation particuliers selon l'invention, au moins un -notamment chaque- réservoir tampon est formé en un matériau souple et imperméable au liquide. Il peut s'agir d'une bâche imperméable au liquide et s'étendant dans ledit espace souterrain et maintenue par le liquide en appui sur les murs de soubassement, le cas échéant sur les fondations, et sur le sol dudit espace souterrain. Dans ces modes de réalisation particuliers selon l'invention, un même réservoir tampon occupe latéralement la totalité dudit espace souterrain.

Dans certains autres modes de réalisation particuliers selon l'invention, au moins un réservoir tampon est une citerne souple formée d'au moins un matériau souple en flexion et rigide en traction -notamment en élastomère ou en matériau polymère composite- et imperméable au liquide. Dans ces autres modes de réalisation, au moins un réservoir tampon est formé d'une pluralité de couches superposées de matériaux distincts ou identiques comprenant au moins une couche d'un matériau textile polyester. Dans ces autres modes de réalisation, au moins un réservoir tampon est autoportant, c'est-à-dire qu'il est maintenu sous une forme déployée dans ledit espace souterrain du fait -notamment du seul fait- de la présence du liquide dans le réservoir tampon. Un tel matériau souple et imperméable au liquide permet de contenir de façon étanche le liquide dans le réservoir tampon tout en présentant une résistance aux contraintes mécaniques (pression, abrasion) et aux agressions chimiques.

Selon certains modes de réalisation d'un procédé selon l'invention, ledit bâtiment thermiquement contrôlé étant doté de fondations délimitant un espace souterrain latéralement sous ledit bâtiment thermiquement contrôlé, au moins un réservoir tampon est logé entièrement dans ledit espace souterrain dudit bâtiment thermiquement contrôlé. Selon certains modes de réalisation d'un procédé selon l'invention, ledit bâtiment thermiquement contrôlé et ledit bâtiment protecteur sont un même et unique bâtiment. Le procédé selon l'invention permet donc de contrôler thermiquement le bâtiment abritant au moins un réservoir tampon de liquide. Cependant, selon certains autres modes de réalisation, rien n'empêche que ledit bâtiment thermiquement contrôlé et ledit bâtiment protecteur soient deux bâtiments distincts, ledit bâtiment protecteur comprenant un espace souterrain, ledit bâtiment thermiquement contrôlé présentant ou non un espace souterrain. En particulier, ledit bâtiment thermiquement contrôlé et ledit bâtiment protecteur peuvent être distants l'un de l'autre ou adjacents ou contigus. Le réservoir tampon de liquide dudit bâtiment protecteur, tenant lieu de capacité thermique, peut permettre de contrôler thermiquement ledit bâtiment thermiquement contrôlé. Il peut également permettre de contrôler thermiquement ledit bâtiment protecteur et ledit bâtiment thermiquement contrôlé.

L'invention s'étend également à un dispositif de contrôle thermique d'au moins un bâtiment, selon la revendication 6.

Dans certains modes de réalisation d'un dispositif selon l'invention, ledit bâtiment thermiquement contrôlé est doté de fondations délimitant un espace, dit espace souterrain, s'étendant latéralement sous ledit bâtiment thermiquement contrôlé, et en ce qu'au moins un réservoir tampon est logé entièrement dans ledit espace souterrain dudit bâtiment thermiquement contrôlé, ledit bâtiment thermiquement contrôlé faisant office de bâtiment protecteur. Dans ces modes de réalisation d'un dispositif selon l'invention, ledit bâtiment thermiquement contrôlé et ledit bâtiment protecteur sont un seul et unique bâtiment. Dans ces modes de réalisation selon l'invention, le(s) réservoir(s) tampon contenant le volume dudit liquide logé(s) entièrement dans l'espace souterrain dudit bâtiment thermiquement contrôlé permet de contrôler au moins la température d'air dudit bâtiment thermiquement contrôlé. Rien n'empêche cependant que selon d'autres modes de réalisation d'un dispositif de contrôle thermique selon l'invention, ledit bâtiment thermiquement contrôlé et ledit bâtiment protecteur soient deux bâtiments distincts. Selon ces autres modes de réalisation, ledit bâtiment thermiquement contrôlé et ledit bâtiment protecteur peuvent être des bâtiments distants l'un de l'autre, ou adjacents ou contigus.

Dans certains modes de réalisation d'un dispositif de contrôle thermique selon l'invention, seul ledit bâtiment thermiquement contrôlé est doté d'au moins un réservoir tampon et fait office de bâtiment protecteur. Dans ces modes de réalisation ledit bâtiment thermiquement contrôlé est autonome vis-à-vis du contrôle thermique d'au moins une température d'air dudit bâtiment thermiquement contrôlé.

Dans certains modes de réalisation, le dispositif de contrôle thermique selon l'invention comporte un unique réservoir tampon. Dans ces modes de réalisation, ledit réservoir tampon occupe la majeure partie -notamment la totalité-dudit espace souterrain. Ledit réservoir tampon peut occuper horizontalement et/ou en hauteur la majeure partie dudit espace souterrain.

Dans certains modes de réalisation d'un dispositif de contrôle thermique selon l'invention, au moins une portion d'enveloppe, dite portion d'échange, d'au moins un réservoir tampon est en contact avec au moins une partie de surface de sol délimitant en profondeur ledit espace souterrain, de façon à permettre un échange thermique par conduction entre au moins une partie de ladite surface et ledit liquide contenu dans ledit au moins un réservoir tampon. Dans certains modes de réalisation d'un dispositif de contrôle thermique selon l'invention ladite portion d'échange est formé d'un matériau thermiquement conducteur.

Dans certains modes de réalisation, un dispositif de contrôle thermique selon l'invention, au moins un réservoir tampon comprend une enveloppe formée au moins en partie d'un matériau souple en flexion et rigide en traction.

Dans certains modes de réalisation, un dispositif de contrôle thermique selon l'invention comprend au moins un circuit dudit liquide entre au moins un réservoir tampon et au moins un dispositif d'échange thermique entre ledit liquide et de l'air d'au moins un espace habitable s'étendant à l'intérieur dudit bâtiment thermiquement contrôlé.

Dans ces modes de réalisation, un dispositif de contrôle thermique selon l'invention comprend au moins une pompe de circulation dudit liquide dans un circuit s'étendant entre au moins un réservoir tampon et au moins un dispositif d'échange thermique.

Dans certains modes de réalisation, le circuit s'étendant entre au moins un réservoir tampon et au moins un échangeur thermique comprend au moins une entrée de liquide en position basse dudit au moins un réservoir tampon et au moins une sortie de liquide en position haute dudit au moins un réservoir tampon, de façon à permettre un prélèvement de liquide en position haute dudit au moins un réservoir tampon, une circulation du liquide prélevé vers au moins un échangeur thermique par le circuit et un retour de liquide dans ledit au moins un réservoir tampon par l'entrée de liquide en position basse dudit au moins un réservoir tampon. Dans ces modes de réalisation de chauffage dudit bâtiment thermiquement contrôlé, on prélève du liquide plus chaud en partie haute du réservoir, on dirige ce liquide chaud vers un dispositif d'échange de chaleur (notamment une pompe à chaleur) dans lequel le liquide cède des calories et se refroidit, puis on dirige le liquide refroidit vers une entrée en partie basse du réservoir dans lequel le liquide refroidit est réchauffé par un apport thermique au contact du sol, le liquide réchauffé circulant dans le réservoir par convexion vers la partie haute de ce dernier.

Rien n'empêche cependant de prévoir que le circuit s'étendant entre ledit au moins un réservoir tampon et au moins un échangeur thermique comprend au moins une entrée de liquide en position haute dudit au moins un réservoir tampon et au moins une sortie de liquide en position basse dudit au moins un réservoir tampon, de façon à permettre un prélèvement de liquide en position basse dudit au moins un réservoir tampon, une circulation du liquide prélevé vers au moins un échangeur thermique par le circuit et un retour de liquide dans ledit au moins un réservoir tampon par l'entrée de liquide en position haute dudit au moins un réservoir tampon.

Dans ces modes de réalisation de rafraîchissement (climatisation) dudit bâtiment thermiquement contrôlé, on prélève du liquide plus froid en partie basse du réservoir, on dirige ce liquide froid vers un dispositif d'échange de chaleur (notamment un climatiseur) dans lequel le liquide accepte des calories et se réchauffe, puis on dirige le liquide réchauffé vers une entrée en partie haute du réservoir dans lequel le liquide réchauffé est refroidit par un transfert thermique par conduction au contact de la surface du sol.

Dans d'autres modes de réalisation selon l'invention, rien n'empêche de prévoir que le dispositif de contrôle thermique comprenne une tubulure de circulation d'un fluide secondaire d'échange thermique, distinct du liquide du réservoir tampon, cette tubulure plongeant dans le réservoir tampon dans lequel le fluide secondaire est en échange thermique avec le liquide du réservoir tampon.

Dans certains modes de réalisation, un dispositif de contrôle thermique selon l'invention comprend au moins une pompe à chaleur.

L'invention s'étend également à un procédé de construction d'un dispositif selon l'invention, dans lequel on dispose au moins un réservoir, dit réservoir tampon, dans un espace, dit espace souterrain, d'un bâtiment, dit bâtiment protecteur, doté de fondations et d'un plancher de plus bas niveau au-dessus des fondations, ledit espace souterrain étant :
- limité en hauteur par le plancher ;
- limité latéralement sous ledit bâtiment protecteur par les fondations, et
- de profondeur au plus égale à celle des fondations,
chaque réservoir tampon étant logé (entièrement) dans ledit espace souterrain et étant apte à recevoir un volume d'un liquide susceptible de pouvoir être utilisé à titre de capacité thermique pour contrôler au moins une température d'air à l'intérieur dudit bâtiment thermiquement contrôlé.

Dans une première variante d'un procédé de construction selon l'invention,
- on bâtit les fondations dudit bâtiment protecteur, puis
- on dispose au moins un réservoir tampon dans ledit espace souterrain, puis
- on bâtit au moins une structure supérieure dudit bâtiment protecteur en appui sur les fondations, ladite structure supérieure délimitant au moins espace habitable dudit bâtiment protecteur.

Dans cette première variante d'un procédé de construction d'un bâtiment neuf selon l'invention, on dispose au moins un réservoir tampon dans ledit espace souterrain pendant la construction du bâtiment.

Dans une deuxième variante d'un procédé de construction selon l'invention, on dispose au moins un réservoir tampon dans ledit espace souterrain après la fin de construction du bâtiment. Dans cette deuxième variante, on aménage un bâtiment préconstruit par la mise en place d'un réservoir tampon dans ledit espace souterrain d'un bâtiment préconstruit.

L'invention concerne également un procédé de contrôle thermique d'un bâtiment et un dispositif de contrôle thermique d'un bâtiment caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :
- la figure 1 est une représentation schématique en coupe d'une première variante à réservoir tampon unique d'un dispositif de contrôle thermique d'un bâtiment selon l'invention,
- la figure 2 est une représentation schématique en coupe d'une deuxième variante à réservoir tampon unique d'un dispositif de contrôle thermique d'un bâtiment selon l'invention,
- la figure 3 est une représentation schématique en coupe d'une troisième variante à réservoir tampon unique d'un dispositif de contrôle thermique d'un bâtiment selon l'invention,
- la figure 4 est une représentation schématique en coupe d'une quatrième variante à pluralité de réservoirs tampon d'un dispositif de contrôle thermique d'un bâtiment selon l'invention,
- la figure 5 est une représentation schématique en coupe d'une cinquième variante à réservoir tampon unique d'un dispositif de contrôle thermique d'un bâtiment selon l'invention,
- la figure 6 est une représentation schématique en coupe d'une sixième variante à réservoir tampon unique d'un dispositif de contrôle thermique d'un bâtiment selon l'invention,
- la figure 7 est une représentation schématique en coupe d'une septième variante à réservoir tampon unique d'un dispositif de contrôle thermique d'un bâtiment selon l'invention, et
- la figure 8 est une représentation schématique en coupe d'une huitième variante à réservoir tampon unique d'un dispositif de contrôle thermique d'un bâtiment selon l'invention.

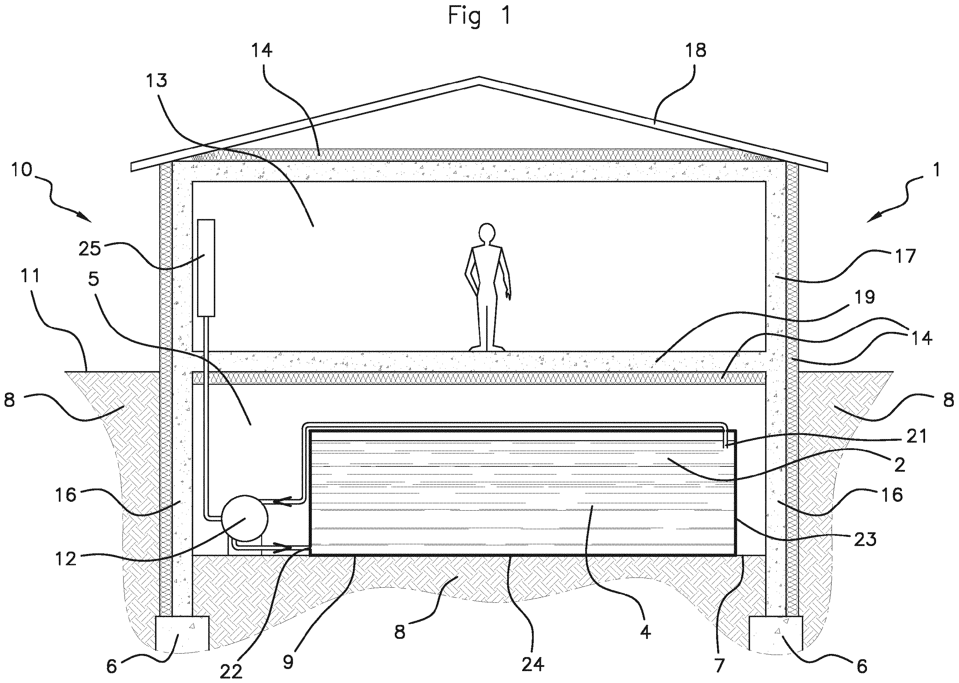

Dans un procédé selon l'invention, de contrôle thermique de différentes variantes d'un bâtiment, dit bâtiment 1 thermiquement contrôlé, représentées en figures 1 à 8, on utilise un volume d'un liquide 4 faisant office de capacité thermique pour contrôler au moins une température d'air d'un espace 13 habitable dudit bâtiment 1 thermiquement contrôlé. Dans certains modes de réalisation particuliers d'un tel procédé selon l'invention, au moins une partie de ce volume de liquide 2 s'écoule dans un réservoir 4 tampon entre une sortie 21 de liquide 2 située en position haute du réservoir 4 tampon et une entrée 22 de liquide 2 située en position basse du réservoir 4 tampon. Dans ces modes de réalisation d'un procédé selon l'invention, la sortie 21 de liquide 2 étant située en position haute du réservoir 4 tampon on réalise un prélèvement de liquide 2 dans le réservoir 4 tampon à distance de ladite portion 9 d'échange, de sorte que la température du liquide 2 prélevé dans le réservoir 4 tampon est supérieure à la température de ladite partie 24 de surface 7 de sol 8 avec laquelle le réservoir 4 tampon est en échange thermique.

Rien n'empêche cependant que, selon d'autres modes de réalisation, au moins une partie de ce volume de liquide 2 s'écoule dans le réservoir 4 tampon entre une sortie de liquide 2 située en position basse du réservoir 4 tampon et une entrée de liquide 2 située en position haute du réservoir 4 tampon. Dans ces autres modes de réalisation d'un procédé selon l'invention, l'entrée de liquide 2 étant située en position basse du réservoir 4 tampon on réalise un prélèvement de liquide 2 dans le réservoir 4 tampon à proximité de ladite portion 9 d'échange, de sorte que la température du liquide 2 prélevé dans le réservoir 4 tampon est sensiblement à la température de ladite partie de surface 7 de sol 8 avec laquelle il est en échange thermique. Le réservoir 4 tampon est formé d'une enveloppe 23 étanche au liquide 2. Cette enveloppe 23 comprend une portion d'enveloppe 23, dite portion 9 d'échange, placée en contact avec une partie 24 de surface 7 de sol 8 délimitant en profondeur un espace 5 souterrain délimité latéralement par des murs 16 de soubassement prenant appui sur des fondations 6 dudit bâtiment 1 thermiquement contrôlé. Ladite portion 9 d'échange est placée de façon à permettre un échange thermique par conduction entre ladite partie 24 de surface 7 de sol 8 et le liquide 2 contenu dans ledit réservoir 4 tampon. En outre, le positionnement de l'entrée de liquide 2 à l'opposé de la sortie du réservoir 4 tampon permet de créer dans le réservoir 4 tampon un flux de liquide 2 entre l'entrée et la sortie conduisant à un brassage du liquide 2 dans le réservoir tampon, permettant un acheminement du liquide 2 au contact de ladite portion 9 d'échange et un échange thermique avec ladite partie 24 de surface 7 de sol 8 dudit espace souterrain.

Ladite portion 9 d'échange est formée d'au moins un matériau conducteur thermique. Ladite portion 9 d'échange peut être formée d'un matériau différent du matériau formant les autres parties d'enveloppe 23 du réservoir 4 tampon, les autres parties d'enveloppe 23 du réservoir 4 tampon pouvant être formé d'au moins un matériau isolant thermique.

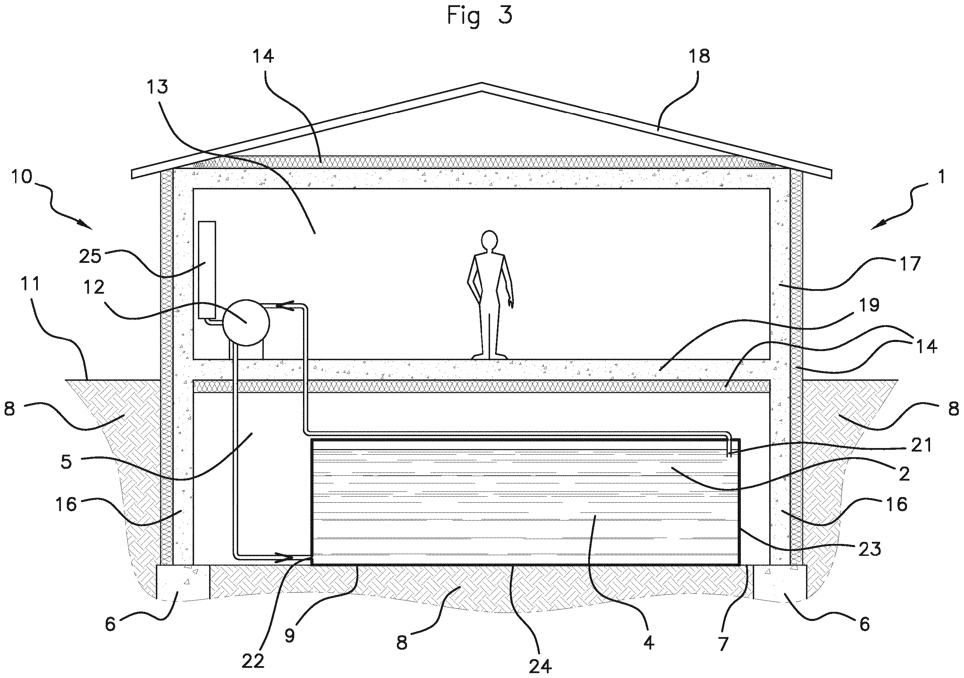

Dans un procédé selon l'invention, on dirige le liquide 2 du réservoir 4 tampon vers un dispositif 12 d'échange thermique dans lequel le liquide 2 échange des calories et/ou des frigories avec au moins un échangeur thermique du dispositif 12 d'échange thermique couplé à un organe 25 de contrôle de la température d'air situé dans un espace 13 habitable dudit bâtiment 1 thermiquement contrôlé. On dirige ensuite le liquide 2 ayant circulé dans le dispositif 12 d'échange thermique vers le réservoir 4 tampon. Dans une variante d'un procédé de contrôle thermique selon l'invention mis en oeuvre avec un dispositif représenté en figure 1, on place le dispositif 12 de contrôle thermique dans l'espace 5 souterrain dudit bâtiment thermiquement contrôlé. Rien n'empêche cependant de placer le dispositif 12 de contrôle thermique dans l'espace 13 habitable dudit bâtiment 1 thermiquement contrôlé comme représenté en figure 3. Il convient alors de modifier le circuit conduisant le liquide 2 à partir du réservoir 4 tampon vers le dispositif 12 de contrôle thermique et de retour du liquide 2 du dispositif 12 de contrôle thermique vers le réservoir 4 tampon. Tout dispositif 12 de contrôle thermique peut être utilisé, du plus simple au plus complexe, par exemple un plancher chauffant ou rafraîchissant, des radiateurs à circulation de liquide, un dispositif de soufflage d'air chaud ou froid, un aérotherme, des plafonds chauffants ou rafraichissants, des murs chauffants ou rafraîchissants.

Dans un procédé de contrôle thermique d'un bâtiment 1 thermiquement contrôlé selon l'invention, on réalise une isolation thermique des murs 16 de soubassement et/ou des murs 17 périphériques et/ou du plancher 19 de plus bas niveau dudit bâtiment 1 thermiquement contrôlé par apposition d'au moins une couche d'un matériau isolant thermique. Dans un tel procédé de contrôle thermique, ledit espace 5 souterrain est isolé thermiquement vis-à-vis des conditions climatiques -notamment des conditions de température- extérieures. Dans un tel procédé de contrôle thermique selon l'invention, le liquide 2 s'écoulant dans le réservoir 4 tampon subit des échanges thermiques essentiellement, voire uniquement, avec ladite portion 9 d'échange et avec ladite partie 24 de sol 8 dudit espace souterrain.

Dans un procédé de contrôle thermique d'un bâtiment selon l'invention, le réservoir 4 tampon peut être formé d'un matériau rigide en flexion. Dans un tel procédé, on met en place le réservoir 4 tampon au cours de la construction du bâtiment, lorsque les fondations 6 et les murs 16 de soubassement sont érigés et que l'espace 5 souterrain est creusé et ouvert en partie haute. On termine ensuite la construction du bâtiment de façon à clore l'espace 5 souterrain et à construire les murs 17 périphériques et la couverture 18.

Dans un procédé de contrôle thermique d'un bâtiment selon l'invention, le réservoir 4 tampon peut également être formé d'un matériau souple en flexion. Il peut s'agir, par exemple, d'un matériau homopolymère acétal, du type HPV13. Dans un tel procédé, on peut introduire dans l'espace 5 souterrain le réservoir 4 tampon dans un état replié sur lui-même puis déployer et mettre en place le réservoir 4 tampon dans l'espace 5 souterrain à tout moment au cours de la construction du bâtiment, notamment en fin de construction lorsque les fondations 6 et les murs 16 de soubassement sont réalisés et délimitent l'espace 5 souterrain et que les murs 17 périphériques sont érigés et que la couverture 18 est mise en place.

Dans le dispositif de contrôle thermique d'un bâtiment, dit bâtiment 1 thermiquement contrôlé, représenté en figure 1, ledit bâtiment 1 thermiquement contrôlé comprend un réservoir 4 tampon logé entièrement dans un espace 5 souterrain limité latéralement par des fondations 6 et des murs 16 de soubassement, de sorte que ledit bâtiment 1 thermiquement contrôlé fait également office de bâtiment 10 protecteur. Il est à noter que dans la variante d'un dispositif de contrôle thermique représenté en figure 1, ledit espace 5 souterrain ne s'étend pas en profondeur jusqu'aux fondations 6 dudit bâtiment 1 thermiquement contrôlé. Dans cette variante d'un dispositif de contrôle thermique, il suffit que ledit espace 5 souterrain étant limité en profondeur par un fond 7 de l'espace 5 souterrain, le fond 7 s'étende à une profondeur suffisante pour que sa température soit sensiblement stable et préservée des variations climatiques de la température extérieure au bâtiment 1 thermiquement contrôlé. Ledit espace 5 souterrain est limité en hauteur par le plancher 19 de plus bas niveau dudit bâtiment 10 protecteur.

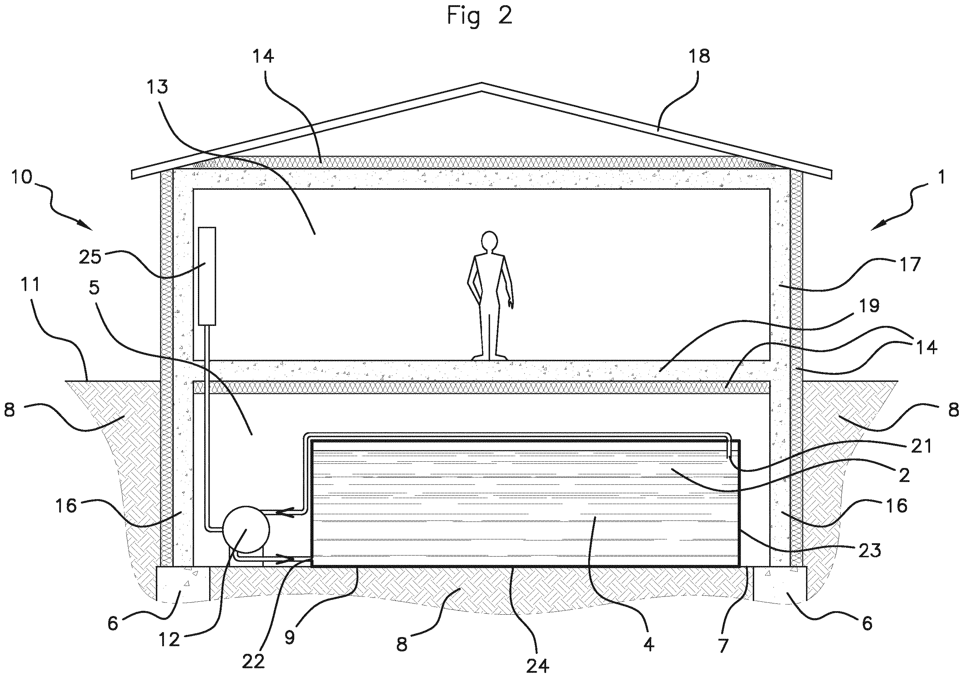

Dans le dispositif de contrôle thermique d'un bâtiment, dit bâtiment 1 thermiquement contrôlé, représenté en figure 2, ledit bâtiment 1 thermiquement contrôlé comprend un réservoir 4 tampon logé entièrement dans un espace 5 souterrain limité latéralement par des fondations 6 et des murs 16 de soubassement et s'étendant en profondeur jusqu'aux fondations 6 dudit bâtiment 1 thermiquement contrôlé. Ledit espace 5 souterrain est limité en hauteur par le plancher 19 de plus bas niveau dudit bâtiment 10 protecteur.

Dans le dispositif de contrôle thermique d'un bâtiment, dit bâtiment 1 thermiquement contrôlé, représenté en figure 3, le dispositif 12 de contrôle thermique est placé dans l'espace 13 habitable dudit bâtiment 1 thermiquement contrôlé. On adapte le circuit conduisant le liquide 2 à partir du réservoir 4 tampon vers le dispositif 12 de contrôle thermique et de retour du liquide 2 du dispositif 12 de contrôle thermique vers le réservoir 4 tampon en conséquence.

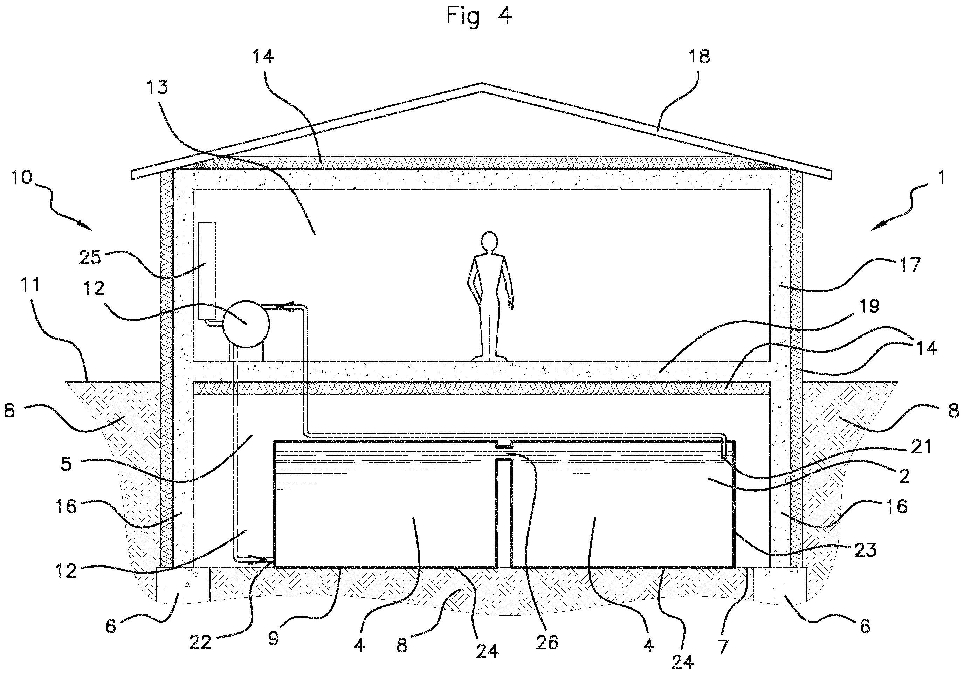

Dans une variante d'un dispositif de contrôle thermique d'un bâtiment, dit bâtiment 1 thermiquement contrôlé, représenté en figure 4, ledit bâtiment 1 thermiquement contrôlé comprend deux réservoirs 4 tampon logés entièrement dans l'espace 5 souterrain limité latéralement par des fondations 6 et des murs 16 de soubassement et s'étendant en profondeur jusqu'aux fondations 6 dudit bâtiment 1 thermiquement contrôlé. Les réservoirs 4 tampon sont montés en série de façon que le liquide de circule successivement dans les deux réservoirs 4 tampon entre une sortie 21 de liquide dans l'un des deux réservoirs 4 tampon et une entrée 22 de liquide 2 de l'autre des deux réservoirs 4 tampon, le dispositif 12 d'échange thermique étend interposé dans le circuit de liquide 2 entre l'entrée 22 et la sortie 21.

Dans la variante d'un dispositif de contrôle thermique représenté en figure 4, les réservoirs 4 tampon sont en communication de liquide par un conduit 26 s'étendant en position haute des réservoirs 4 tampon. Rien n'empêche cependant de prévoir que les réservoirs 4 tampon soient mis en communication de fluide par un conduit s'étendant en position basse des réservoirs tampon, ou par un conduit débouchant en position haute de l'un des réservoirs tampon et en position basse de l'autre des réservoirs tampon.

Rien n'empêche, en variante selon l'invention qu'un dispositif de contrôle thermique comprenne plus de deux réservoirs 4 tampon, au moins l'un des réservoirs 4 tampon étend logé entièrement dans l'espace 5 souterrain d'un bâtiment, limité latéralement par des fondations et, le cas échéant, des murs de soubassement et en profondeur au plus jusqu'aux fondations.

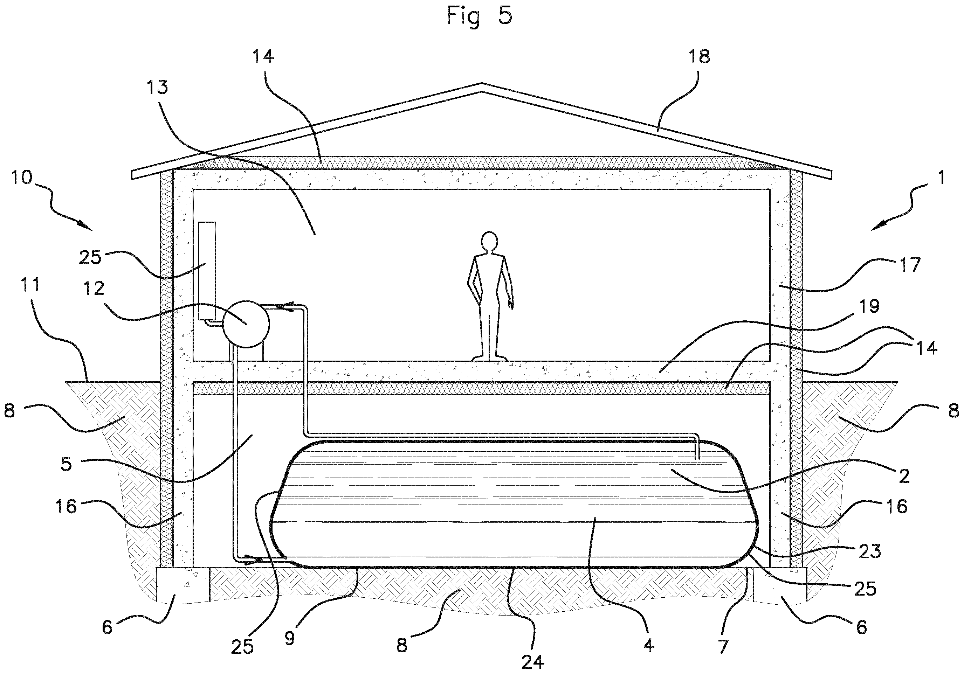

Dans une variante d'un dispositif de contrôle thermique d'un bâtiment, dit bâtiment 1 thermiquement contrôlé, représenté en figure 5, ledit bâtiment 1 thermiquement contrôlé comprend un unique réservoir 4 tampon comprenant 1 enveloppe 23 constituée d'un matériau souple en flexion. Conformément à l'invention, le réservoir 4 tampon est logé entièrement dans l'espace 5 souterrain limité latéralement par des fondations 6 et des murs 16 de soubassement et s'étendant en profondeur jusqu'aux fondations 6 dudit bâtiment 1 thermiquement contrôlé. Un tel réservoir 4 tampon est particulièrement avantageux en cela que l'enveloppe 23 du réservoir 4 tampon peut être simplement introduite à l'état replié dans l'espace 5 souterrain dudit bâtiment thermiquement contrôlé, puis être dépliée dans l'espace 5 souterrain en vue de recevoir le liquide 2. Un tel réservoir 4 tampon est également avantageux en cela que sa souplesse en flexion est particulièrement adaptée pour favoriser le contact entre ladite face 9 d'échange de l'enveloppe 23 du réservoir 4 tampon et une partie 24 de sol 8 non parfaitement plan. Un tel réservoir 4 tampon est autoportant. Il peut être formé par un assemblage par exemple par soudure étanche à haute fréquence de lès de textile technique composite formé de PVC enrobant une trame de polyester. Un tel matériau souple et imperméable au liquide est adapté pour permettre un stockage étanche de liquide tout en présentant une résistance aux contraintes mécaniques (pression, abrasion) et aux agressions chimiques. Un tel matériau souple et imperméable au liquide présente une résistance maximale en traction déterminée selon la norme NF EN 1421 de l'ordre de 400 daN/5cm (décaNewton/5cm) et une résistance maximale à la déchirure déterminée selon la norme NF EN 1875-3 de l'ordre de 30 daN (décaNewton).

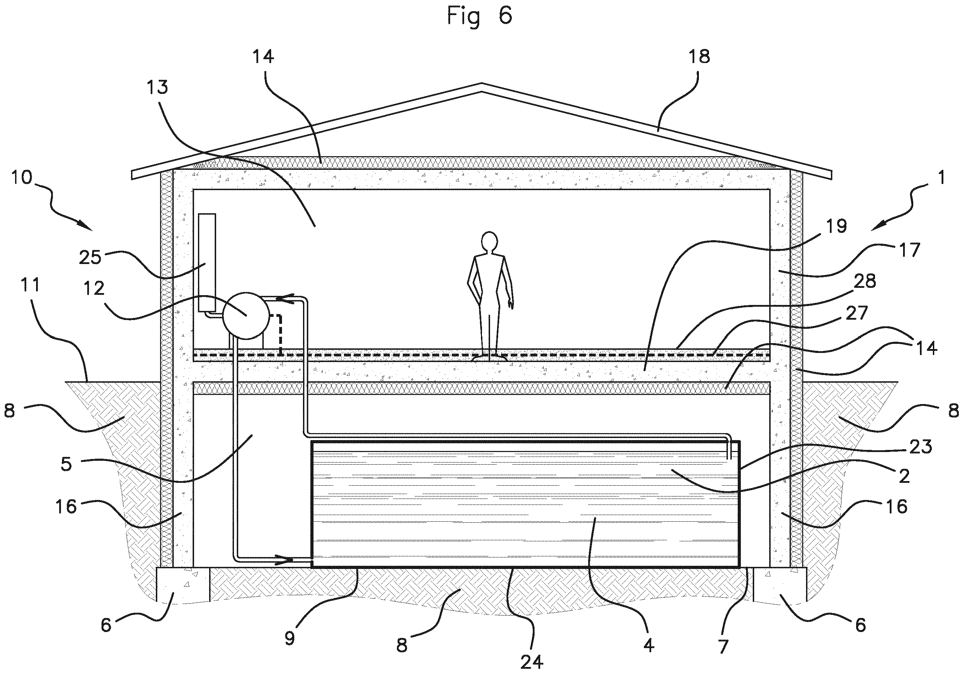

Dans une variante d'un dispositif de contrôle thermique d'un bâtiment, dit bâtiment 1 thermiquement contrôlé, représenté en figure 6, ledit bâtiment 1 thermiquement contrôlé comprend un dispositif 12 d'échange thermique entre le liquide 2 circulant à partir du réservoir 4 tampon et un circuit 27 de fluide (liquides et/ou gazeux) circulant dans l'épaisseur ou sous un plancher 28 chauffant d'un espace 13 habitable dudit bâtiment 1 thermiquement contrôlé. Un tel dispositif de contrôle thermique selon l'invention est donc souple dans ses utilisations et confortable dans ses effets procurés.

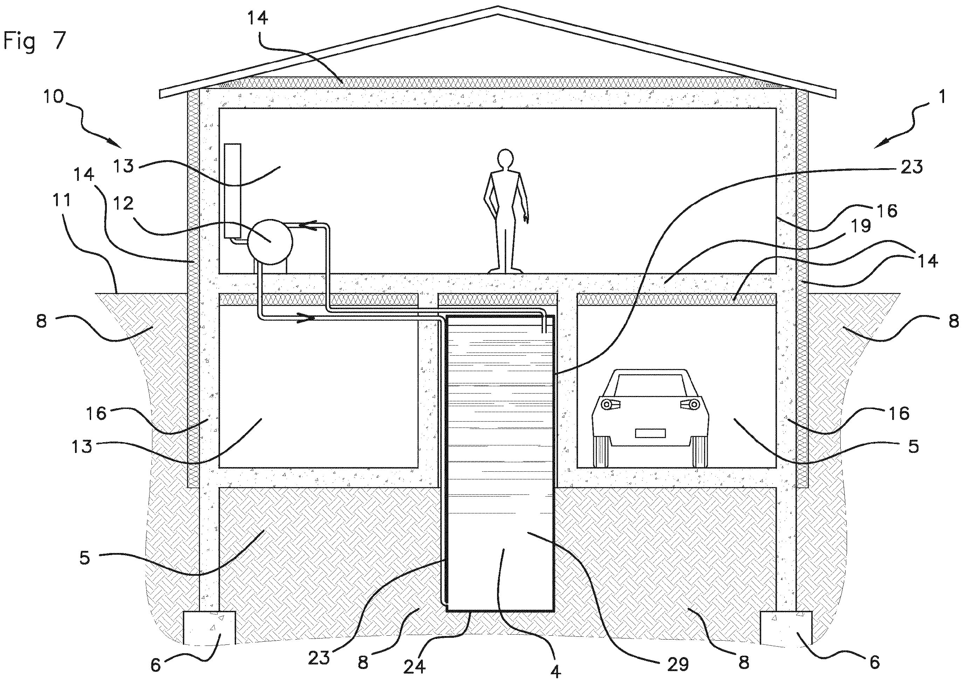

Dans une variante d'un dispositif de contrôle thermique d'un bâtiment, dit bâtiment 1 thermiquement contrôlé, représenté en figure 7, ledit bâtiment 1 thermiquement contrôlé est un bâtiment comprenant un espace 5 souterrain limité en profondeur par des fondations 6 formées à grande pour profondeur par rapport à la surface 11 du sol. Typiquement, l'espace 5 souterrain peut s'étendre jusqu'à une profondeur supérieure à 5 m, notamment de l'ordre de 10 m selon le nombre et la hauteur de niveaux aménagés dans ledit espace 5 souterrain. Il peut s'agir en particulier d'un bâtiment comprenant un espace 5 souterrain dédié au stationnement de véhicules automobiles comme représenté en figure 7 et présentant au moins deux niveaux de stationnement. Un tel espace 5 souterrain peut également former un puits 29 vertical d'accueil d'un réservoir 4 tampon de forme allongée et dont l'axe d'allongement est sensiblement vertical. Dans la variante d'un dispositif de contrôle thermique représenté en figure 7, le réservoir 4 tampon est un réservoir tampon autoportant et formé d'un matériau rigide en flexion de façon que seule la base du réservoir 4 tampon est en contact avec la partie 24 de sol 8. Rien n'empêche cependant de placer le réservoir 4 tampon en appui sur au moins un mur 16 de soubassement périphérique du bâtiment. Rien n'empêche également que le matériau 14 isolant soit appliqué sur une fraction supérieure seulement d'un mur 16 de soubassement périphérique et que des échanges thermiques puissent se produire entre la partie basse du réservoir 4 tampon et une partie basse du mur 16 de soubassement périphérique.

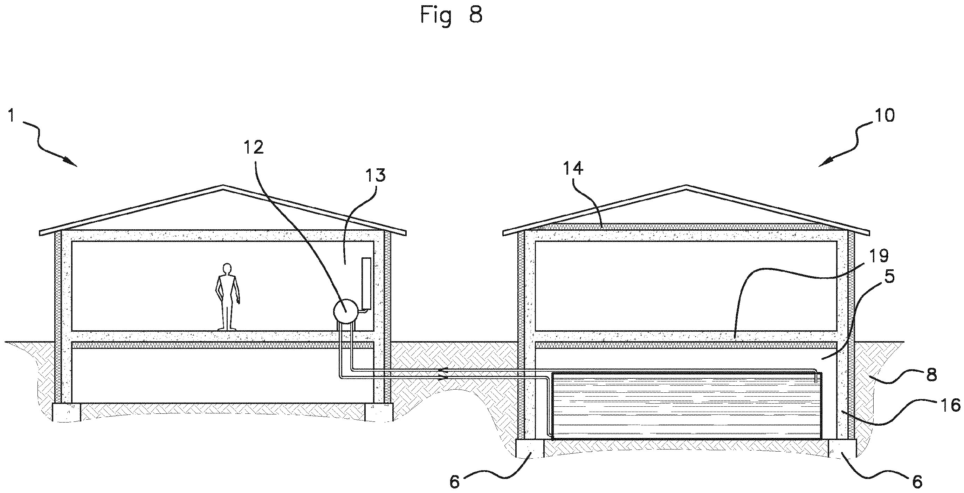

Dans une autre variante représentée en figure 8, un dispositif de contrôle thermique selon l'invention comprend un premier bâtiment, dit bâtiment 1 thermiquement contrôlé, et un deuxième bâtiment, dit bâtiment 10 protecteur, doté de fondations 6 délimitant un espace 5 souterrain latéralement sous ledit bâtiment 10 protecteur, ledit espace 5 souterrain étant de profondeur au plus égale à celle des fondations 6. Ledit bâtiment 1 thermiquement contrôlé définit un espace 13 habitable dont la température d'air est à contrôler. Ledit bâtiment 10 protecteur abrite un réservoir 4 tampon logé entièrement dans ledit espace 5 souterrain, le réservoir 4 tampon contenant au moins une partie du volume du liquide 2 utilisé à titre de capacité thermique pour contrôler au moins une température d'air régnant à l'intérieur dudit bâtiment thermiquement contrôlé distant. En variante, rien n'empêche que le dispositif selon l'invention présente une pluralité de bâtiments 10 protecteurs et une pluralité de bâtiments 1 thermiquement contrôlés, les circuits de liquide utilisé à titre de capacité thermique étant indépendants ou dépendants les uns des autres.

En variante non représentée, un dispositif de contrôle thermique d'un bâtiment selon l'invention peut comprendre au moins un dispositif de filtration du liquide utilisé à titre de capacité thermique. Un tel dispositif de filtration peut comprendre une pluralité de filtres montés en série sur le circuit de liquide, chaque filtre de la pluralité de filtres présentant une valeur de seuil de coupure distincte et décroissante dans le sens de circulation du liquide. Un tel dispositif de filtration peut être placé sur un conduit d'approvisionnement du réservoir tampon en liquide à partir, par exemple, d'un réseau de collecte d'eaux de pluie, permettant de retenir successivement des particules (débris de feuilles, par exemple) solides de taille de plus en plus réduite. On place successivement en série dans le sens de circulation du liquide un filtre présentant un seuil de coupure de 1 mm puis un autre filtre présentant un seuil de coupure de 0,1 mm.

En variante non représentée, un dispositif selon l'invention peut comprendre un dispositif de détection du niveau de liquide dans le réservoir tampon. Un tel dispositif de détection d'une variation du niveau de liquide permet de détecter toute fuite de liquide dans le circuit et de pouvoir remédier à cette fuite sans risquer d'inonder l'espace souterrain.

En variante non représentée, l'un quelconque des dispositifs selon l'invention représentés en figures 1 à 8, peut comprendre au moins l'un des organes suivants :
- un circuit de prélèvement de liquide dans le réservoir tampon et de distribution de liquide vers l'extérieur du dispositif;
- un conduit d'approvisionnement du réservoir tampon en liquide à partir, par exemple, d'un réseau de collecte d'eaux de pluie ;
- au moins un organe du type vanne 3 voies disposé pour permettre un prélèvement de liquide alternativement en partie supérieure ou en partie inférieure du réservoir tampon et sa distribution dans le circuit vers le dispositif d'échange thermique. Un tel organe permet d'adapter le fonctionnement du dispositif de contrôle thermique aux conditions climatiques ;
- au moins un organe du type vanne 3 voies disposé pour permettre une distribution de liquide alternativement dans le dispositif d'échange thermique ou vers l'extérieur du dispositif de contrôle thermique. On utilise alors le réservoir tampon comme réserve d'eau pour l'arrosage ;
- une crépine de filtration comprenant un filtre placée en sortie du réservoir tampon permettant de délivrer dans le circuit de liquide et dans le dispositif d'échange thermique du liquide sensiblement exempt de particules indésirables. On choisit le filtre de la crépine de filtration avec un seuil de coupure de 10 µm. Il convient de nettoyer ou changer le filtre de la crépine de filtration avec une fréquence régulière.

L'invention peut faire l'objet de nombreuses variantes et applications autres que celles décrites ci-dessus. En particulier, toute forme particulière et matériau constitutif du réservoir tampon, tout procédé et dispositif de contrôle thermique d'un bâtiment comprenant un dispositif d'échange thermique interposé entre le réservoir tampon logé dans l'espace souterrain dudit bâtiment protecteur fait partie de l'invention. Rien n'empêche également de prévoir que le procédé et le dispositif de contrôle thermique d'un bâtiment comprennent d'autre organes annexes de chauffage, tels que par exemple des capteurs d'énergie solaire.

## Revendications

1. Procédé de contrôle thermique d'un bâtiment, dit bâtiment (1) thermiquement contrôlé, dans lequel un volume d'un liquide (2) est utilisé pour contrôler au moins une température d'air à l'intérieur dudit bâtiment (1) thermiquement contrôlé,
dans lequel au moins un réservoir, dit réservoir (4) tampon, contenant au moins une partie dudit volume dudit liquide (2) s'étend sous au moins un bâtiment, dit bâtiment (10) protecteur, doté de fondations (6) et d'un plancher (19) de plus bas niveau au-dessus de ces fondations (6) ;
ledit réservoir (4) tampon est logé dans un espace, dit espace (5) souterrain, dudit bâtiment (10) protecteur, limité en hauteur par le plancher (19) dudit bâtiment (10) protecteur, ledit volume dudit liquide (2) est utilisé à titre de capacité thermique ;
ledit espace (5) souterrain est limité latéralement par les fondations (6) dudit bâtiment (10) protecteur, et de profondeur au plus égale à celle des fondations (6) ;
et au moins une portion d'enveloppe, dite portion (9) d'échange, d'au moins un réservoir (4) tampon est placée en contact avec au moins une partie (24) de surface (7) de sol (8) délimitant en profondeur ledit espace (5) souterrain, de façon à permettre un échange thermique par conduction entre au moins une partie de ladite partie (24) de surface (7) et ledit liquide (2) contenu dans au moins un réservoir (4) tampon.

2. Procédé selon la revendication 1, **caractérisé en ce qu'**on forme un flux dudit liquide (2) entre au moins un réservoir (4) tampon et au moins un dispositif (12) d'échange thermique entre ledit liquide (2) et de l'air dudit bâtiment (1) thermiquement contrôlé.

3. Procédé selon l'une des revendications 1 ou 2, **caractérisé en ce qu'**on loge dans ledit espace (5) souterrain au moins un réservoir (4) tampon présentant au moins une dimension horizontale hors-tout supérieure à sa hauteur hors-tout.

4. Procédé selon l'une des revendications 1 à 3, **caractérisé en ce qu'**on loge dans ledit espace (5) souterrain un réservoir (4) tampon unique occupant la majeure partie dudit espace (5) souterrain.

5. Procédé selon l'une des revendications 1 à 4, **caractérisé en ce que** ledit bâtiment (1) thermiquement contrôlé étant doté de fondations (6) délimitant un espace (5) souterrain latéralement sous ledit bâtiment (1) thermiquement contrôlé, au moins un réservoir (4) tampon est logé entièrement dans ledit espace (5) souterrain dudit bâtiment (1) thermiquement contrôlé.

6. Dispositif de contrôle thermique d'un bâtiment, dit bâtiment (1) thermiquement contrôlé, comprenant :
- un volume d'un liquide (2) pour contrôler au moins une température d'air à l'intérieur dudit bâtiment (1) thermiquement contrôlé, et
- au moins un bâtiment, dit bâtiment (10) protecteur, doté de fondations (6) et d'un plancher (19) de plus bas niveau au-dessus des fondations (6) ;
- au moins un réservoir (4) tampon ;
∘ contenant au moins une partie dudit volume dudit liquide (2),
∘ logé dans un espace, dit espace (5) souterrain, dudit bâtiment (10) protecteur, ledit espace (5) souterrain étant limité en hauteur par le plancher (19) dudit bâtiment (10) protecteur ;
ledit volume dudit liquide (2) est apte à faire office de capacité thermique ;
ledit espace (5) souterrain est limité latéralement par les fondations (6) dudit bâtiment (10) protecteur et de profondeur au plus égale à celle des fondations (6) ;
et au moins une portion d'enveloppe, dite portion (9) d'échange, d'au moins un réservoir (4) tampon est configuré pour être en contact avec au moins une partie de surface délimitant en profondeur ledit espace souterrain, de façon à permettre un échange thermique par conduction entre au moins une partie de ladite partie de surface (7) et ledit liquide (2) contenu dans ledit au moins un réservoir (4) tampon.

7. Dispositif selon la revendication 6, **caractérisé en ce que** ledit bâtiment (1) thermiquement contrôlé est doté de fondations (6) délimitant un espace (5) souterrain latéralement sous ledit bâtiment (1) thermiquement contrôlé, et **en ce qu'**au moins un réservoir (4) tampon est logé entièrement dans ledit espace (5) souterrain dudit bâtiment (1) thermiquement contrôlé, ledit bâtiment (1) thermiquement contrôlé faisant office de bâtiment (10) protecteur.

8. Dispositif selon la revendication 7, **caractérisé en ce que** seul ledit bâtiment (1) thermiquement contrôlé est doté d'au moins un réservoir (4) tampon et fait office de bâtiment (10) protecteur.

9. Dispositif selon l'une des revendications 6 à 8, **caractérisé en ce qu'**il comporte un unique réservoir (4) tampon.

10. Dispositif selon la revendication 9, **caractérisé en ce que** ledit réservoir (4) tampon occupe la majeure partie dudit espace (5) souterrain.

11. Dispositif selon l'une des revendications 6 à 10, **caractérisé en ce qu'**au moins un réservoir (4) tampon comprend une enveloppe formée au moins en partie d'un matériau souple en flexion et rigide en traction.

12. Dispositif selon l'une des revendications 6 à 11, **caractérisé en ce qu'**il comprend au moins un circuit dudit liquide entre au moins un réservoir (4) tampon et au moins un dispositif d'échange thermique entre ledit liquide (2) et de l'air d'au moins un espace (13) habitable s'étendant à l'intérieur dudit bâtiment (1) thermiquement contrôlé.

13. Dispositif selon l'une des revendications 6 à 12, **caractérisé en ce qu'**il comprend au moins une pompe à chaleur.

## Patentansprüche

1. Thermisches Regulierungsverfahren eines Gebäudes, bezeichnet als thermisch reguliertes Gebäude (1), wobei ein Volumen einer Flüssigkeit (2) verwendet wird, um mindestens eine Lufttemperatur im Inneren des thermisch regulierten Gebäudes (1) zu regulieren,
wobei sich mindestens ein Behälter, bezeichnet als Zwischenspeicherbehälter (4), der mindestens einen Teil des Volumens der Flüssigkeit (2) enthält, unter mindestens einem Gebäude, bezeichnet als Schutzgebäude (10), erstreckt, das mit Fundamenten (6) und einem Boden (19) mit dem niedrigsten Niveau über diesen Fundamenten (6) versehen ist; der Zwischenspeicherbehälter (4) in einem Raum, bezeichnet als unterirdischer Raum (5), des Schutzgebäudes (10) untergebracht ist, der in der Höhe durch den Boden (19) des Schutzgebäudes (10) begrenzt ist,
wobei das Volumen der Flüssigkeit (2) als Wärmekapazität verwendet wird;
der unterirdische Raum (5) seitlich durch die Fundamente (6) des Schutzgebäudes (10) begrenzt ist und höchstens so tief ist wie die Fundamente (6);
und mindestens ein Mantelabschnitt, bezeichnet als Austauschabschnitt (9), mindestens eines Zwischenspeicherbehälters (4) in Kontakt mit mindestens einem Teil (24) der Oberfläche (7) des Bodens (8) platziert ist, der den unterirdischen Raum (5) in der Tiefe begrenzt, sodass ein Wärmeaustausch durch Übertragung zwischen mindestens einem Teil des Teils (24) der Oberfläche (7) und der Flüssigkeit (2), die in mindestens einem Zwischenspeicherbehälter (4) enthalten ist, ermöglicht wird.

2. Verfahren nach Anspruch 1, **dadurch gekennzeichnet, dass** ein Strom der Flüssigkeit (2) zwischen mindestens einem Zwischenspeicherbehälter (4) und mindestens einer Vorrichtung (12) zum Wärmeaustausch zwischen der Flüssigkeit (2) und der Luft des thermisch regulierten Gebäudes (1) gebildet wird.

3. Verfahren nach einem der Ansprüche 1 oder 2, **dadurch gekennzeichnet, dass** in dem unterirdischen Raum (5) mindestens ein Zwischenspeicherbehälter (4) untergebracht ist, der mindestens eine horizontale Gesamtabmessung aufweist, die größer ist als seine Gesamthöhe.

4. Verfahren nach einem der Ansprüche 1 bis 3, **dadurch gekennzeichnet, dass** in dem unterirdischen Raum (5) ein einzelner Zwischenspeicherbehälter (4) untergebracht ist, der den größten Teil des unterirdischen Raums (5) einnimmt.

5. Verfahren nach einem der Ansprüche 1 bis 4, **dadurch gekennzeichnet, dass**, da das thermisch regulierte Gebäude (1) mit Fundamenten (6) versehen ist, die einen unterirdischen Raum (5) seitlich unter dem thermisch regulierten Gebäude (1) begrenzen, mindestens ein Zwischenspeicherbehälter (4) vollständig in dem unterirdischen Raum (5) des thermisch regulierten Gebäudes (1) untergebracht ist.

6. Vorrichtung zur thermischen Regulierung eines Gebäudes, bezeichnet als thermisch reguliertes Gebäude (1), umfassend:
- ein Volumen einer Flüssigkeit (2), um mindestens eine Lufttemperatur im Inneren des thermisch regulierten Gebäudes (1) zu regulieren, und
- mindestens ein Gebäude, bezeichnet als Schutzgebäude (10), das mit einem Fundament (6) und einem Boden (19) mit dem niedrigsten Niveau über dem Fundament (6) versehen ist;
- mindestens einen Zwischenspeicherbehälter (4);
o der mindestens einen Teil des Volumens der Flüssigkeit (2) enthält,
∘ der in einem Raum, bezeichnet als unterirdischer Raum (5), des Schutzgebäudes (10) untergebracht ist, wobei der unterirdische Raum (5) in der Höhe durch den Boden (19) des Schutzgebäudes (10) begrenzt ist;
wobei das Volumen der Flüssigkeit (2) geeignet ist, um als Wärmekapazität zu fungieren; der unterirdische Raum (5) seitlich durch die Fundamente (6) des Schutzgebäudes (10) begrenzt ist und höchstens so tief ist wie die Fundamente (6);
und wobei mindestens ein Mantelabschnitt, bezeichnet als Austauschabschnitt (9), mindestens eines Zwischenspeicherbehälters (4) konfiguriert ist, um in Kontakt mit mindestens einem Teil der Oberfläche zu sein, der den unterirdischen Raum in der Tiefe begrenzt, sodass ein Wärmeaustausch durch Übertragung zwischen mindestens einem Teil des Teils der Oberfläche (7) und der Flüssigkeit (2), die in mindestens einem Zwischenspeicherbehälter (4) enthalten ist, ermöglicht wird.

7. Vorrichtung nach Anspruch 6, **dadurch gekennzeichnet, dass** das thermisch regulierte Gebäude (1) mit Fundamenten (6) versehen ist, die einen unterirdischen Raum (5) seitlich unter dem thermisch regulierten Gebäude (1) begrenzen, und dass mindestens ein Zwischenspeicherbehälter (4) vollständig in dem unterirdischen Raum (5) des thermisch regulierten Gebäudes (1) untergebracht ist, wobei das thermisch regulierte Gebäude (1) als Schutzgebäude (10) dient.

8. Vorrichtung nach Anspruch 7, **dadurch gekennzeichnet, dass** nur das thermisch regulierte Gebäude (1) mit mindestens einem Zwischenspeicherbehälter (4) versehen ist und als Schutzgebäude (10) fungiert.

9. Vorrichtung nach einem der Ansprüche 6 bis 8, **dadurch gekennzeichnet, dass** sie einen einzigen Zwischenspeicherbehälter (4) umfasst.

10. Vorrichtung nach Anspruch 9, **dadurch gekennzeichnet, dass** der Zwischenspeicherbehälter (4) den größten Teil des unterirdischen Raums (5) einnimmt.

11. Vorrichtung nach einem der Ansprüche 6 bis 10, **dadurch gekennzeichnet, dass** mindestens ein Zwischenspeicherbehälter (4) einen Mantel umfasst, der zumindest teilweise aus einem biegeweichen und zugsteifen Material gebildet ist.

12. Vorrichtung nach einem der Ansprüche 6 bis 11, **dadurch gekennzeichnet, dass** sie mindestens einen Kreislauf der Flüssigkeit zwischen mindestens einem Zwischenspeicherbehälter (4) und mindestens einer Vorrichtung zum Wärmeaustausch zwischen der Flüssigkeit (2) und der Luft mindestens eines bewohnbaren Raums (13) umfasst, der sich im Inneren des thermisch regulierten Gebäudes (1) erstreckt.

13. Vorrichtung nach einem der Ansprüche 6 bis 12, **dadurch gekennzeichnet, dass** sie mindestens eine Wärmepumpe umfasst.

## Claims

1. A method for thermal control of a building, called thermally controlled building (1), wherein a volume of a liquid (2) is used to control at least one air temperature inside said thermally controlled building (1),
wherein at least one tank, called buffer tank (4), containing at least a part of said volume of said liquid (2) extends below at least one building, called protector building (10), provided with foundations (6) and a floor (19) of lower level below these foundations (6);
said buffer tank (4) is housed in a space, called underground space (5), of said protector building (10), limited in terms of height by the floor (19) of said protector building (10),
said volume of said liquid (2) is used as heat capacity;
said underground space (5) is limited laterally by the foundations (6) of said protector building (10), and has a depth at most equal to that of the foundations (6);
and at least one envelope portion, called exchange portion (9), of at least one buffer tank (4) is placed in contact with at least one ground (8) surface (7) part (24) delimiting said underground space (5) in terms of depth, so as to allow a heat exchange by conduction between at least one part of said surface (7) part (24) and said liquid (2) contained in at least one buffer tank (4).

2. The method according to claim 1, **characterized in that** a flow of said liquid (2) is formed between at least one buffer tank (4) and at least one heat exchange device (12) between said liquid (2) and the air of said thermally controlled building (1).

3. The method according to one of claims 1 or 2, **characterized in that** at least one buffer tank (4) having at least one overall horizontal dimension larger than its overall height is housed in said underground space (5).

4. The method according to one of claims 1 to 3, **characterized in that** a single buffer tank (4) occupying the majority of said underground space (5) is housed in said underground space (5).

5. The method according to one of claims 1 to 4, **characterized in that** said thermally controlled building (1) being provided with foundations (6) delimiting an underground space (5) laterally below said thermally controlled building (1), at least one buffer tank (4) is housed entirely in said underground space (5) of said thermally controlled building (1).

6. A device for thermal control of a building, called thermally controlled building (1), comprising:
- a volume of a liquid (2) for controlling at least one air temperature inside said thermally controlled building (1), and
- at least one building, called protector building (10), provided with foundations (6) and a floor (19) of lower level below these foundations (6);
- at least one buffer tank (4);
∘ containing at least one part of said volume of said liquid (2),
∘ housed in a space, called underground space (5), of said protector building (10), said underground space (5) being limited in terms of height by the floor (19) of said protector building (10);
said volume of said liquid (2) is able to serve as heat capacity;
said underground space (5) is delimited laterally by the foundations (6) of said protector building (10) and has a depth at most equal to that of the foundations (6);
and at least one envelope portion, called exchange portion (9), of at least one buffer tank (4) is configured to be in contact with at least one surface part delimiting said underground space in terms of depth, so as to allow a heat exchange by conduction between at least one part of said surface part (7) and said liquid (2) contained in said at least one buffer tank (4).

7. The device according to claim 6, **characterized in that** said thermally controlled building (1) is provided with foundations (6) delimiting an underground space (5) laterally below said thermally controlled building (1), and **in that** at least one buffer tank (4) is housed entirely in said underground space (5) of said thermally controlled building (1), said thermally controlled building (1) serving as protector building (10).

8. The device according to claim 7, **characterized in that** only said thermally controlled building (1) is provided with at least one buffer tank (4) and serves as protector building (10).

9. The device according to one of claims 6 to 8, **characterized in that** it includes a single buffer tank (4).

10. The device according to claim 9, **characterized in that** said buffer tank (4) occupies the majority of said underground space (5).

11. The device according to one of claims 6 to 10, **characterized in that** at least one buffer tank (4) comprises an envelope formed at least in part by a material that is flexible in flexion and rigid in tension.

12. The device according to one of claims 6 to 11, **characterized in that** it comprises at least one circuit for said liquid between at least one buffer tank (4) and at least one heat exchange device between said liquid (2) and the air of at least one habitable space (13) extending to the inside of said thermally controlled building (1).

13. The device according to one of claims 6 to 12, **characterized in that** it comprises at least one heat pump.
